# EUROPEAN PATENT APPLICATION

(11) **EP 3 623 135 A1**
(43) Date of publication of application: **18.03.2020**
(21) Application number: 18810391.5
(22) Date of filing: 16.05.2018
(51) Int. Cl.: B29C 47/60, B29C 47/76, B29K 21/00

(54) **RUBBER EXTRUDER AND SCREW FOR SAME**

(30) Priority: 29.05.2017 JP 2017105250
(71) Applicant: Sumitomo Rubber Industries, Ltd., Kobe-shi, Hyogo 651-0072 (JP); Nakata Engineering Co., Ltd., Kobe-shi, Hyogo 651-2312 (JP)
(72) Inventor: TANAKA Tomoo, Kobe-shi Hyogo 651-0072 (JP); NAKAMURA Yoshinobu, Kobe-shi Hyogo 651-0072 (JP); SAKAMOTO Masayuki, Kobe-shi Hyogo 651-0072 (JP); SATO Tadasuke, Kobe-shi Hyogo 651-2312 (JP); OTA Ryusuke, Kobe-shi Hyogo 651-2312 (JP); TAKEUCHI Hideaki, Kobe-shi Hyogo 651-2312 (JP); MICHIBAYASHI Masaaki, Kobe-shi Hyogo 651-2312 (JP); NODA Makoto, Kobe-shi Hyogo 651-2312 (JP)
(74) Representative: Manitz Finsterwald Patent- und Rechtsanwaltspartnerschaft mbB
(86) International application number: PCT/JP2018/018897
(87) International publication number: WO 2018/221219

(57) **Abstract**

To provide a rubber extruder capable of efficiently removing volatile components in unvulcanized rubber without decreasing productivity of the unvulcanized rubber. The rubber extruder 1 is for extruding the unvulcanized rubber (G) while kneading. It includes a barrel 2 having an input port 5 for introducing the unvulcanized rubber (G) and a discharge port 6 for discharging the unvulcanized rubber (G), a screw 3, which is arranged in the barrel 2, for extruding the unvulcanized rubber (G), and a vent 4 for sucking out air in the barrel 2. The screw 3 has a dam portion 7 which locally controls an extrusion amount of the unvulcanized rubber (G), a first screw portion 8 defined between the input port 5 and the dam portion 7, and a second screw portion 9 defined between the dam portion 7 and the discharge port 6. An effective screw length (L1) of the first screw portion 8 is 50% or more of a total effective screw length (L) of the screw 3.

## Description

### Technical Field

The present invention relates to a rubber extruder for extruding unvulcanized rubber while kneading and a screw thereof.

### Background Art

A rubber extruder having a screw has been known as a rubber extruder for extruding unvulcanized rubber while kneading. A conventional rubber extruder having a screw discharges unvulcanized rubber introduced from an input port from a discharge port while kneading with the screw.

In general, volatile components are contained in unvulcanized rubber. If a large amount of volatile components remain in the unvulcanized rubber, when the unvulcanized rubber discharged from the rubber extruder is vulcanized, the volatile components are vaporized, therefore, it is possible that a large number of bubbles are generated, which results in poor performance or damage to the final product.

Thereby, Patent document 1 shown below has proposed a rubber extruder including a dam portion provided in the screw and a vent for removing the volatile components in the unvulcanized rubber passed through the dam portion.

### Prior art document

### Patent document

Patent document 1: Japanese Patent Application Publication No. 2005-161808

### Summary of the Invention

### Problems to be Solved by the Invention

The rubber extruder disclosed in Patent document 1 makes it easy for the volatile components to vaporize and to be removed by extending the unvulcanized rubber thinly at the dam portion. However, in the rubber extruder disclosed in Patent document 1, the extrusion rate of the unvulcanized rubber is regulated at the dam portion, therefore, it is possible that the productivity is greatly decreased.

The present invention has been made in view of the above, and a primary object thereof is to provide a rubber extruder capable of efficiently removing the volatile components in the unvulcanized rubber without decreasing the productivity of the unvulcanized rubber.

### Means for solving the Problem

The present invention is a rubber extruder for extruding unvulcanized rubber while kneading including a barrel having an input port for introducing the unvulcanized rubber and a discharge port for discharging the unvulcanized rubber, a screw, which is arranged in the barrel, for extruding the unvulcanized rubber, and a vent for sucking out air in the barrel, characterized in that the screw has a dam portion which locally controls an extrusion amount of the unvulcanized rubber, a first screw portion defined between the input port and the dam portion, and a second screw portion defined between the dam portion and the discharge port, and an effective screw length (L1) of the first screw portion is 50% or more of a total effective screw length (L) of the screw.

In the rubber extruder according to the present invention, it is preferred that the effective screw length (L1) of the first screw portion is 60% or less of the total effective screw length (L) of the screw.

In the rubber extruder according to the present invention, it is preferred that an effective screw length (L2) of the second screw portion is 35% or more of the total effective screw length (L) of the screw.

In the rubber extruder according to the present invention, it is preferred that a ratio (L/D) between the total effective screw length (L) of the screw and an outer diameter (D) of the screw is 16 or more and 24 or less.

In the rubber extruder according to the present invention, it is preferred that a ratio (L1/D1) between the effective screw length (L1) of the first screw portion and an outer diameter (D1) of the first screw portion is 8 or more and 12 or less.

In the rubber extruder according to the present invention, it is preferred that the second screw portion is formed by a single thread screw in at least a portion corresponding to a position where the vent is formed.

In the rubber extruder according to the present invention, it is preferred that in the second screw portion, a range of 30% or more and 100% or less of an effective screw length (L2) of the second screw portion from the dam portion toward the discharge port is formed by a single thread screw.

In the rubber extruder according to the present invention, it is preferred that the first screw portion is formed by a double thread screw.

The present invention is a screw for a rubber extruder for extruding unvulcanized rubber while kneading including a dam portion which locally controls an extrusion amount of the unvulcanized rubber, a first screw portion positioned on an upstream side of the dam portion in an extrusion direction of the unvulcanized rubber, a second screw portion positioned on a downstream side of the dam portion in the extrusion direction of the unvulcanized rubber, characterized in that an effective screw length (L1) of the first screw portion is 50% or more of a total effective screw length (L) including the first screw portion, the dam portion, and the second screw portion.

In the screw according to the present invention, it is preferred that the second screw portion is formed by a single thread screw in a range of 30% or more and 100% or less of an effective screw length (L2) of the second screw portion from the dam portion toward the downstream side.

### Advantageous Effects of the Invention

The rubber extruder according to the present invention includes the barrel having the input port for introducing the unvulcanized rubber and the discharge port for discharging the unvulcanized rubber, the screw, which is arranged in the barrel, for extruding the unvulcanized rubber, and the vent for sucking out the air in the barrel. The rubber extruder configures as such can extrude the unvulcanized rubber while kneading it and can decrease the pressure in the barrel at the same time, therefore, it is possible that the volatile components in the unvulcanized rubber are efficiently removed.

The screw for a rubber extruder according to the present invention has the dam portion which locally controls the extrusion amount of the unvulcanized rubber, the first screw portion defined between the input port and the dam portion, and the second screw portion defined between the dam portion and the discharge port. The screw configured as such extends the unvulcanized rubber thinly at the dam portion, therefore, it is possible that it puts the unvulcanized rubber in a condition in which the volatile components in the unvulcanized rubber are easily vaporized and removed therefrom.

In the rubber extruder according to the present invention, the effective screw length (L1) of the first screw portion is 50% or more of the total effective screw length (L) of the screw. The screw configured as such increases conveying force of the unvulcanized rubber at the first screw portion, and as a result, the extrusion amount of the unvulcanized rubber at the dam portion can be increased. Thereby, the rubber extruder according to the present invention can efficiently remove the volatile components in the unvulcanized rubber without decreasing the productivity of the unvulcanized rubber.

The screw according to the present invention has the dam portion which locally controls the extrusion amount of the unvulcanized rubber, the first screw portion positioned on the upstream side of the dam portion in the extrusion direction of the unvulcanized rubber, the second screw portion positioned on the downstream side of the dam portion in the extrusion direction of the unvulcanized rubber. The screw configured as such extends the unvulcanized rubber thinly at the dam portion, therefore, it can puts the unvulcanized rubber in the condition in which the volatile components in the unvulcanized rubber are easily vaporized and removed therefrom.

In the screw according to the present invention, the effective screw length (L1) of the first screw portion is 50% or more of the total effective screw length (L) including the first screw portion, the dam portion, and the second screw portion. The screw configured as such increases the conveying force of the unvulcanized rubber at the first screw portion, and as a result, it is possible that the extrusion amount of the unvulcanized rubber at the dam portion is increased.
Thereby, the rubber extruder which uses the screw according to the present invention can efficiently remove the volatile components in the unvulcanized rubber by the vent provided in the rubber extruder without decreasing the productivity of the unvulcanized rubber.

### Brief Description of the Drawings

[Fig. 1] a cross-sectional view of a rubber extruder showing an embodiment of the present invention.
[Fig. 2] a cross-sectional view of the rubber extruder showing another embodiment of the present invention.
[Fig. 3] a cross-sectional view of the rubber extruder showing yet another embodiment of the present invention.

### Description of the Preferred Embodiment

An embodiment of the present invention will now be described below in detail in conjunction with accompanying drawings.

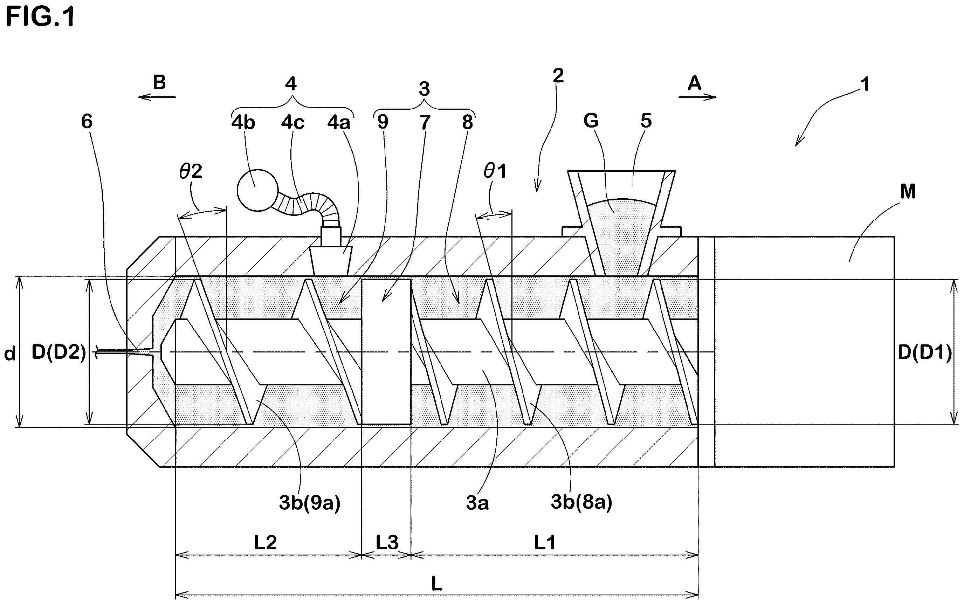

Fig. 1 is a cross-sectional view showing a rubber extruder 1 in this embodiment. As shown in Fig. 1, the rubber extruder 1 in this embodiment extrudes unvulcanized rubber (G) from an upstream side (A) toward a downstream side (B) while kneading. It is preferred that the rubber extruder 1 includes a barrel 2 having a substantially cylindrical shape, a screw 3 arranged inside the barrel 2, and a vent 4 for sucking out the air in the barrel 2.

The barrel 2 has a substantially constant inner diameter (d) from the upstream side (A) to the downstream side (B) in an extrusion direction of the unvulcanized rubber (G), for example. It is preferred that the barrel 2 is provided in a circumferential portion on the upstream side (A) with an input port 5 for introducing the unvulcanized rubber (G). Further, it is preferred that the barrel 2 is provided at an end portion thereof on the downstream side (B) with a discharge port 6 for discharging the unvulcanized rubber (G).

The screw 3 is for extruding the unvulcanized rubber (G) in the barrel 2. It is preferred that the screw 3 includes a screw shaft (3a) and a spiral blade (3b) that protrudes from the screw shaft (3a) outwardly in a radial direction thereof. The screw shaft (3a) is driven by a driving device (M) located on the upstream side (A) of the barrel 2, for example.

The screw 3 in this embodiment has a predetermined total effective screw length (L) and a predetermined outer diameter (D). Here, the total effective screw length (L) of the screw 3 is a length in an axial direction thereof from an end portion thereof on the upstream side (A) to an end portion thereof on the downstream side (B) in a range where the spiral blade (3b) is formed. Further, the outer diameter (D) of the screw 3 is a maximum outer diameter of the spiral blade (3b).

It is preferred that a ratio (L/D) between the total effective screw length (L) of the screw 3 and the outer diameter (D) of the screw 3 is 16 or more and 24 or less. If the ratio (L/D) is less than 16, it is possible that the unvulcanized rubber (G) is not properly conveyed, therefore, it is possible that the unvulcanized rubber (G) overflows from the input port 5. Conversely, if the ratio (L/D) is more than 24, torsional torque becomes large, therefore, it is possible that the screw 3 is damaged.

The screw 3 in this embodiment has a dam portion 7 which locally regulates an extrusion amount of the unvulcanized rubber (G), a first screw portion 8 arranged on the upstream side (A) of the dam portion 7, and a second screw portion 9 arranged on the downstream side (B) in the extrusion direction of the dam portion 7. The screw 3 configured as such extends the unvulcanized rubber (G) thinly at the dam portion 7, therefore, it is possible that it puts the unvulcanized rubber (G) in a condition in which the volatile components in the unvulcanized rubber (G) are easily vaporized and removed therefrom.

The first screw portion 8 in this embodiment is positioned in a region from the input port 5 to the dam portion 7 of the barrel 2. Further, the second screw portion 9 in this embodiment is positioned in a region from the dam portion 7 to the discharge port 6 of the barrel 2.

In the screw shaft (3a) in this embodiment, the dam portion 7, the first screw portion 8, and the second screw portion 9 are connected integrally. Further, the spiral blade (3b) in this embodiment includes a first spiral blade (8a) located in the first screw portion 8 and a second spiral blade (9a) located in the second screw portion 9.

The first spiral blade (8a) has a predetermined lead angle θ1 and formed continuously in a circumferential direction while being displaced in the axial direction of the screw shaft (3a), for example. The first spiral blade (8a) configured as such can extrude the unvulcanized rubber (G) in the barrel 2 from the input port 5 to the dam portion 7 while kneading.

An outer diameter (D1) of the first screw portion 8 is an outer diameter of the first spiral blade (8a). The outer diameter (D1) of the first screw portion 8 in this embodiment is equal to the outer diameter (D) of the screw 3. It is preferred that a ratio (L1/D1) between an effective screw length (L1) of the first screw portion 8 and a ratio (L1/D1) between the outer diameter (D1) of the first screw portion 8 is 8 or more and 12 or less. If the ratio (L1/D1) is less than 8, the unvulcanized rubber (G) cannot be conveyed properly, therefore, it is possible that the unvulcanized rubber (G) overflows from the input port 5. On the other hand, if the ratio (L1/D1) is more than 12, a later-described effective screw length (L2) of the second screw portion 9 becomes relatively small, it is possible that the vent 4 which is positioned in the vicinity of the second screw portion 9 is blocked by the unvulcanized rubber (G).

The effective screw length (L1) of the first screw portion 8 is a length in the axial direction of the region where the first spiral blade (8a) is formed, theta is the length in the axial direction between the dam portion 7 and an end portion on the upstream side (A) of the first spiral blade (8a). It is preferred that the effective screw length (L1) of the first screw portion 8 is 50% or more of the total effective screw length (L) of the screw 3. By setting the effective screw length (L1) of the first screw portion 8 to be 50% or more of the total effective screw length (L) of the screw 3, conveying force of the unvulcanized rubber (G) at the first screw portion 8 is greatly increased, and as a result, it is possible that the extrusion amount of the unvulcanized rubber (G) at the dam portion 7 is increased. Thereby, the rubber extruder 1 does not have a possibility of decreasing the productivity of the unvulcanized rubber (G).

Further, it is preferred that the effective screw length (L1) of the first screw portion 8 is 60% or less of the total effective screw length (L) of the screw 3. By setting the effective screw length (L1) of the first screw portion 8 to be 60% or less of the total effective screw length (L) of the screw 3, a later-described effective screw length (L2) of the second screw portion 9 becomes relatively large, therefore, there is no possibility that the vent 4 which is located in the vicinity of the second screw portion 9 is blocked by the unvulcanized rubber (G).

The second spiral blade (9a) has a predetermined lead angle θ2 and formed continuously in the circumferential direction while being displaced in the axial direction of the screw shaft (3a), for example. The second spiral blade (9a) configured as such can extrude the unvulcanized rubber (G) in the barrel 2 from the dam portion 7 to the discharge port 6 while kneading.

The lead angle θ2 of the second screw portion 9 in this embodiment is larger than the lead angle θ1 of the first screw portion 8. Thereby, it is possible that the second screw portion 9 efficiently extrudes the unvulcanized rubber (G) which passed the dam portion 7 to the discharge port 6, therefore, it is possible that the vent 4 positioned in the vicinity of the second screw portion 9 is made difficult to be blocked by the unvulcanized rubber (G).

An outer diameter (D2) of the second screw portion 9 is an outer diameter of the second spiral blade (9a). The outer diameter (D2) of the second screw portion 9 in this embodiment is equal to the outer diameter (D1) of the first screw portion 8 and is equal to the outer diameter (D) of the screw 3.

Further, the effective screw length (L2) of the second screw portion 9 is a length in the axial direction of the region where the second spiral blade (9a) is formed, that is the length in the axial direction between the dam portion 7 and an end portion on the downstream side (B) of the second spiral blade (9a). It is preferred that the effective screw length (L2) of the second screw portion 9 is 35% or more of the total effective screw length (L) of the screw 3. By setting the effective screw length (L2) of the second screw portion 9 to be 35% or more of the total effective screw length (L) of the screw 3, there is no possibility that the vent 4 which is positioned in the vicinity of the second screw portion 9 is blocked by the unvulcanized rubber (G).

Note that the total effective screw length (L) of the screw 3 in this embodiment is a sum of the effective screw length (L1) of the first screw portion 8, the effective screw length (L2) of the second screw portion 9, and a length (L3) in the axial direction of the dam portion 7.

It is illustrated as an example that the dam portion 7 in this embodiment has the increased outer diameter of the screw shaft (3a). The embodiment of the dam portion 7 is not limited to this, various known embodiments can be applied as long as the dam portion 7 locally regulates the extrusion amount of the unvulcanized rubber (G).

The vent 4 in this embodiment includes a vent port (4a) formed in the barrel 2, a vacuum pump (4b), and a connecting pipe (4c) which connects the vent port (4a) and the vacuum pump (4b). The vent 4 configured as such can make the inside of the barrel 2 have a negative pressure, therefore, the air in the barrel 2 can be sucked out.

It is preferred that the vent port (4a) is provided adjacently to the dam portion 7 on the downstream side (B) of the dam portion 7. By the vent 4 including the vent port (4a) configured as such, it is possible that the volatile components are efficiently removed from the unvulcanized rubber (G) which is extended thinly at the dam portion 7.

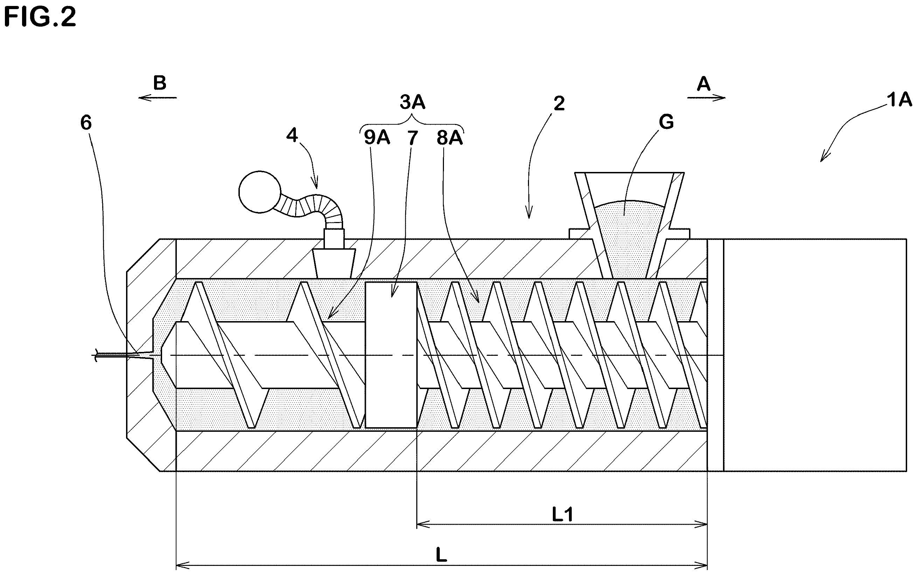

Fig. 2 is a cross-sectional view of a rubber extruder (1A) according to another embodiment. The same reference numerals are given to the elements common to the embodiments described above, and the explanations thereof are omitted. As shown in Fig. 2, the rubber extruder (1A) in this embodiment has the barrel 2 having the substantially cylindrical shape, a screw (3A) arranged inside the barrel 2, and the vent 4 for sucking out the air in the barrel 2.

The screw (3A) in this embodiment has the dam portion 7 which locally regulates the extrusion amount of the unvulcanized rubber (G), a first screw portion (8A) arranged on the upstream side (A) of the dam portion 7, and a second screw portion (9A) arranged on the downstream side (B) in the extrusion direction of the dam portion 7.

The first screw portion (8A) in this embodiment is formed by a double thread screw. It is preferred that the effective screw length (L1) of the first screw portion (8A) is 50% or more and 60% or less of the total effective screw length (L) of the screw (3A). The first screw portion (8A) configured as such can stably extrude the unvulcanized rubber (G) toward the dam portion 7, therefore, it is possible that the pressure of the unvulcanized rubber (G) at the first screw portion (8A) is kept constant.

The second screw portion (9A) in this embodiment is formed by a single thread screw in at least a portion corresponding to the position where the vent 4 is formed. It is possible that the second screw portion (9A) configured as such efficiently extrudes the unvulcanized rubber (G) toward the discharge port 6, therefore, even the unvulcanized rubber (G) has a high viscosity, there is no possibility that the vent 4 is blocked by the unvulcanized rubber (G).

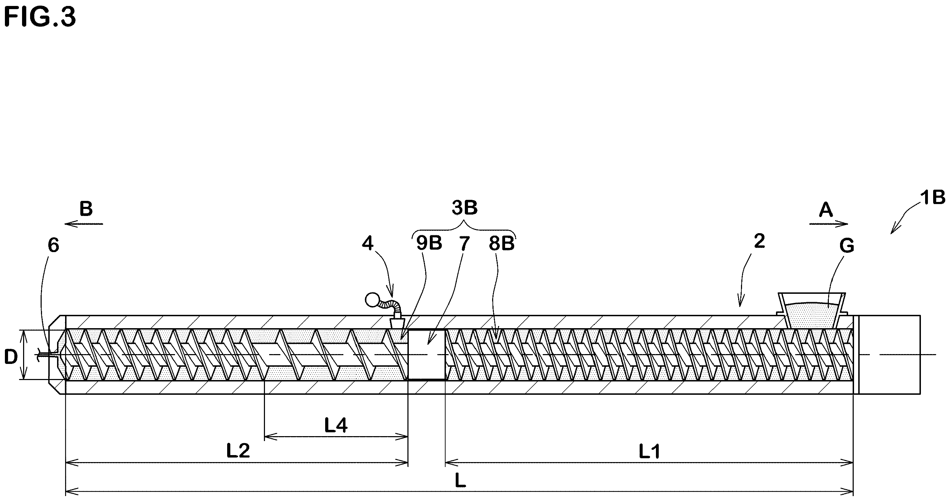

Fig. 2 is a cross-sectional view of a rubber extruder (1B) according to yet another embodiment. The same reference numerals are given to the elements common to the embodiments described above, and the explanations thereof are omitted. As shown in Fig. 3, the rubber extruder (1B) in this embodiment has the barrel 2 having the substantially cylindrical shape, a screw (3B) arranged inside the barrel 2, and the vent 4 for sucking out the air in the barrel 2.

Note that in Fig. 1 and Fig. 2, the dimensions in a direction of the outer diameter (D) of the screw 3 are exaggerated for easy understanding, but in Fig. 3, the case is shown in which the ratio (L/D) between the total effective screw length (L) of the screw (3B) and the outer diameter (D) of the screw (3B) is 16.

The screw (3B) in this embodiment has the dam portion 7 which locally regulates the extrusion amount of the unvulcanized rubber (G), a first screw portion (8B) arranged on the upstream side (A) of the dam portion 7, and a second screw portion (9B) arranged on the downstream side (B) in the extrusion direction of the dam portion 7.

The first screw portion (8B) in this embodiment is formed by a double thread screw. It is preferred that the effective screw length (L1) of the first screw portion (8B) is 50% or more and 60% or less of the total effective screw length (L) of the screw (3B). The first screw portion (8B) configured as such can stably extrude the unvulcanized rubber (G) toward the dam portion 7, therefore, it is possible that the pressure of the unvulcanized rubber (G) at the first screw portion (8B) is kept constant.

In the second screw portion (9B) in this embodiment, at least a part of the range from the dam portion 7 toward the discharge port 6 positioned on the downstream side (B) is formed by a single thread screw. It is preferred that a length (L4) of the region where the single thread screw is formed from the dam portion 7 is 30% or more and 100% or less of the effective screw length (L2) of the second screw portion (9B). The second screw portion (9B) configured as such can efficiently extrude the unvulcanized rubber (G) in the vicinity of the vent 4, therefore, it is possible that the unvulcanized rubber (G) is stably extruded in the vicinity of the discharge port 6.

while detailed description has been made of especially preferred embodiments of the present invention, the present invention can be embodied in various forms without being limited to the illustrated embodiments.

### Description of the Reference signs

- 1: rubber extruder
- 2: barrel
- 3: screw
- 4: vent
- 5: input port
- 6: discharge port
- 7: dam portion
- 8: first screw portion
- 9: second screw portion
- G: unvulcanized rubber

## Claims

1. A rubber extruder for extruding unvulcanized rubber while kneading comprising
a barrel having an input port for introducing the unvulcanized rubber and a discharge port for discharging the unvulcanized rubber,
a screw, which is arranged in the barrel, for extruding the unvulcanized rubber, and
a vent for sucking out air in the barrel, wherein
the screw has a dam portion which locally controls an extrusion amount of the unvulcanized rubber, a first screw portion defined between the input port and the dam portion, and a second screw portion defined between the dam portion and the discharge port, and
an effective screw length (L1) of the first screw portion is 50% or more of a total effective screw length (L) of the screw.

2. The rubber extruder as set forth in claim 1, wherein
the effective screw length (L1) of the first screw portion is 60% or less of the total effective screw length (L) of the screw.

3. The rubber extruder as set forth in claim 1 or 2, wherein
an effective screw length (L2) of the second screw portion is 35% or more of the total effective screw length (L) of the screw.

4. The rubber extruder as set forth in any one of claims 1 to 3, wherein
a ratio (L/D) between the total effective screw length (L) of the screw and an outer diameter (D) of the screw is 16 or more and 24 or less.

5. The rubber extruder as set forth in any one of claims 1 to 4, wherein
a ratio (L1/D1) between the effective screw length (L1) of the first screw portion and an outer diameter (D1) of the first screw portion is 8 or more and 12 or less.

6. The rubber extruder as set forth in any one of claims 1 to 5, wherein
the second screw portion is formed by a single thread screw in at least a portion corresponding to a position where the vent is formed.

7. The rubber extruder as set forth in any one of claims 1 to 6, wherein
in the second screw portion, a range of 30% or more and 100% or less of an effective screw length (L2) of the second screw portion from the dam portion toward the discharge port is formed by a single thread screw.

8. The rubber extruder as set forth in any one of claims 1 to 7, wherein
the first screw portion is formed by a double thread screw.

9. A screw for a rubber extruder for extruding unvulcanized rubber while kneading comprising
a dam portion which locally controls an extrusion amount of the unvulcanized rubber,
a first screw portion positioned on an upstream side of the dam portion in an extrusion direction of the unvulcanized rubber,
a second screw portion positioned on a downstream side of the dam portion in the extrusion direction of the unvulcanized rubber, wherein
an effective screw length (L1) of the first screw portion is 50% or more of a total effective screw length (L) including the first screw portion, the dam portion, and the second screw portion.

10. The screw as set forth in claim 9, wherein
the second screw portion is formed by a single thread screw in a range of 30% or more and 100% or less of an effective screw length (L2) of the second screw portion from the dam portion toward the downstream side.
